# Europäisches Patentamt
## European Patent Office
### Office européen des brevets

(19)

(11) Veröffentlichungsnummer: **0 229 618**
**B1**

(12) **EUROPÄISCHE PATENTSCHRIFT**

(45) Veröffentlichungstag der Patentschrift:
04.04.90

(51) Int. Cl.⁴: **F16D 55/224**, F16D 65/847, F16D 55/02

(21) Anmeldenummer: 87100053.5

(22) Anmeldetag: 05.01.87

(54) Schwimmsattel-Teilbelag-Scheibenbremse.

(30) Priorität: 17.01.86 DE 8601094 U
30.04.86 DE 8611885 U

(43) Veröffentlichungstag der Anmeldung:
22.07.87 Patentblatt 87/30

(45) Bekanntmachung des Hinweises auf die Patenterteilung:
04.04.90 Patentblatt 90/14

(84) Benannte Vertragsstaaten:
DE ES FR GB IT

(56) Entgegenhaltungen:
DE-A- 1 600 069
DE-A- 3 009 002
DE-B- 2 604 579
DE-C- 2 845 404
DE-U- 8 601 094
DE-U- 8 611 885
FR-A- 2 523 241
GB-A- 959 183
GB-A- 991 990
GB-A- 1 059 472

(73) Patentinhaber: LUCAS INDUSTRIES public limited company, Great King Street, Birmingham, B19 2XF West Midlands(GB)

(72) Erfinder: Heibel, Helmut, Wiesenstrasse 1, D-5431 Moschheim(DE)

(74) Vertreter: Wuesthoff, Franz, Dr.-Ing. et al, Wuesthoff & Wuesthoff Patent- und Rechtsanwälte Schweigerstrasse 2, D-8000 München 90(DE)

ACTORUM AG

**Beschreibung**

Die Erfindung betrifft eine Schwimmsattel-Teilbelag-Scheibenbremse für Kraftfahrzeuge mit einem Schwimmsattel, der in bezug auf einen fahrzeugfesten Träger verschiebbar gelagert ist, zwei Bremsbacken, welche die Bremsscheibe beidseits beaufschlagen und auf ihren der Bremsscheibe abgekehrten Seiten Trägerplatten für Bremsbeläge aufweisen, einer hydraulischen Kolben-Zylinder-Anordnung im Schwimmsattel, die einen der zwei Bremsbacken direkt und den anderen über den Schwimmsattel beaufschlagt, und einer Gleit-Führung zwischen dem Träger und dem Schwimmsattel.

Eine derartige Schwimmsattel-Teilbelag-Scheibenbremse ist aus der DE-C 28 45 404 bekannt. Dort stehen von einem fahrzeugfesten Träger zwei Dorne ab, an denen die beiden Trägerplatten der Bremsbacken abgestützt sind. Der Schwimmsattel ist mittels einer Gleit-Führung in Richtung der Achse der Bremsscheibe verschiebbar am Träger abgestützt. Somit wird die beim Bremsen erzeugte Reibungskraft je nach Fahrtrichtung direkt auf einen der beiden Dorne übertragen.

Die Belag-Trägerplatten und der fahrzeugfeste Träger bzw. die an ihm befestigten Dorne oder andere Führungsmittel bestehen üblicherweise aus rostanfälligen Metallen. Insbesondere bei Kontakt mit Salzwasser besteht eine erhebliche Rostgefahr. Durch Rost wird aber die Beweglichkeit der Belag-Trägerplatten, d.h. ihre freie Bewegung zur Bremsscheibe hin und nach Beendigung einer Bremsung von dieser weg, behindert. Der Schwimmsattel läßt sich hingegen abgedichtet am fahrzeugfesten Träger verschiebbar lagern, so daß bezüglich der Gleitbewegung des Schwimmsattels relativ zum Träger keine Schwierigkeiten auftreten.

Aus der DE-A 14 25 212 ist eine Scheibenbremse bekannt, bei der sich die Belag-Trägerplatten nicht an einem fahrzeugfesten Träger abstützen, sondern an einem beweglichen Gehäuse. Das Gehäuse ist aber nicht wie ein Schwimmsattel gelagert, sondern schwenkt bei einer Bremsbewegung um zwei Achsen. Es handelt sich also nicht um eine Schwimmsattel-Scheibenbremse. Die bei einer Bremsung erzeugten Reibungskräfte werden über die Gelenke des Gehäuses auf den ortsfesten Träger übertragen. Rostanfällige Gleit-Führungen sind nicht vorgesehen, doch werden die Gelenke extrem stark belastet und müssen entsprechend stabil ausgelegt sein, was einen erheblichen Herstellungsaufwand bedingt.

Der Erfindung liegt die Aufgabe zugrunde, die gattungsgemäße Schwimmsattel-Teilbelag-Scheibenbremse derart weiterzubilden, daß insbesondere durch Rost keine Behinderung der Gleitbewegung der Bremsbacken auftreten kann. Auch soll bei geringen Herstellungskosten eine lange Funktionstüchtigkeit der Bremse gewährleistet sein.

Erfindungsgemäß wird diese Aufgabe dadurch gelöst, daß eine der Belag-Trägerplatten ausschließlich am Schwimmsattel und die andere ausschließlich am Kolben der Kolben-Zylinder-Anordnung abgestützt ist und daß zwischen dem Kolben oder einem mit diesem fest verbundenen Bauteil und dem fahrzeugfesten Träger eine weitere Gleit-Führung vorgesehen ist.

Die Belag-Trägerplatten werden somit erfindungsgemäß nicht direkt am fahrzeugfesten Träger abgestützt, vielmehr wird die Relativbewegung zwischen dem fahrzeugfesten Träger und den Belag-Trägerplatten sowie dem Schwimmsattel ausschließlich über Gleit-Führungen besorgt, welche zwischen dem Schwimmsattel sowie dem Kolben der Kolben-Zylinder-Anordnung einerseits und dem Träger andererseits vorgesehen sind und welche sich gegen Spritzwasser schützen lassen, so daß eine Rostgefahr weitgehend ausgeschlossen werden kann.

Da bei der erfindungsgemäßen Schwimmsattel-Teilbelag-Scheibenbremse der Bewegung der Bremsbacken zur Bremsscheibe hin und von dieser weg keinerlei nennenswerter Reibungswiderstand entgegensteht, ist gewährleistet, daß nach der Beendigung eines Bremsvorganges das Bremsmoment vollständig abgebaut werden kann, da sich die Bremsbeläge frei von der Bremsscheibe lösen können.

Die in Umfangsrichtung der Bremsscheibe auf die Bremsbeläge übertragenen Reibungskräfte können symmetrisch in bezug auf die Ebene der Bremsscheibe auf den fahrzeugfesten Träger übertragen werden, was die Stabilität der Anordnung erhöht.

Bei einer erfindungsgemäßen Bremse braucht der fahrzeugfeste Träger nur mit Drehwerkzeugen bearbeitet zu werden. Da eine Räumung des Belag-Schachtes nicht erforderlich ist, sind teuere Räumnadeln nicht erforderlich.

Bei Einleitung eines hohen Bremsmomentes verbiegt sich der fahrzeugfeste Träger geringfügig. Der Schwimmsattel und auch der Kolben (der Kolben-Zylinder-Anordnung) bzw. das mit dem Kolben fest verbundene Bauteil haben aber einen gewissen Schwenk-Freiheitsgrad in bezug auf die Achse der Bremsscheibe, so daß sowohl der Schwimmsattel als auch der Kolben die geringfügigen Bewegungen des Trägers kompensieren können und die Bremsbeläge immer exakt planparallel die Bremsscheibe beaufschlagen.

Bevorzugt ist die Schwimmsattel-Teilbelag-Scheibenbremse so ausgestaltet, daß beidseits der Bremsscheibe in Umfangsrichtung derselben beabstandet jeweils zwei Gleit-Führungen vorgesehen sind, wobei die Gleit-Führungen zwischen dem Träger und dem Schwimmsattel auf der einen Seite der Bremsscheibe und die Gleit-Führungen zwischen dem Träger und dem Kolben bzw. dem mit diesem fest verbundenen Bauteil auf der anderen Seite der Bremsscheibe angeordnet sind. Da der Schwimmsattel und der Brems-Kolben bzw. das mit ihm fest verbundene Bauteil sowohl (geringfügig) um die Mittelachse der Kolben-Zylinder-Anordnung verschwenkbar und längs dieser Achse verschiebbar sind, wird aus der Lage-

2

rung in den vier Gleit-Führungen am fahrzeugfesten Träger kinematisch eine sogenannte Dreipunktlagerung, so daß der Schwimmsattel und der Kolben bei jeder Belastung statisch bestimmt sind.

Am Schwimmsattel bzw. Kolben sind bevorzugt rotationssymmetrische Sitze für Schutz-Manschetten vorgesehen, so daß einfache, rotationssymmetrische Manschetten verwendet werden können. Die Manschetten sind auch einfach aufsetzbar.

Als Gleit-Führungen sind bevorzugt Anordnungen aus Führungsstiften und Nuten vorgesehen, wobei die Führungsstifte am fahrzeugfesten Träger befestigt sind und die Nuten im Schwimmsattel und im Kolben, bzw. dem hiermit fest verbundenen Bauteil, vorgesehen sind. Es ist aber auch möglich, die Führungsstifte an den letztgenannten Bauteilen anzubringen und die Nuten am fahrzeugfesten Träger vorzusehen. In jedem Falle lassen sich die Gleit-Führungen durch Manschetten gegen Spritzwasser abdichten. Die Manschetten können bevorzugt zumindest an ihren den heißlaufenden Bremsbelägen zugekehrten Seiten von einem Schutzblech abgedeckt sein, so daß sie sich nicht zu sehr erhitzen können.

Bei Scheibenbremsen der hier in Rede stehenden Art kommt es wesentlich auf eine störungsfreie Gleitführung der Bremsbacken bzw. des Schwimmsattels an. Insbesondere durch zu großes Spiel der Teile können bei Betätigung der Bremsen unerwünschte Quietsch-Geräusche auftreten.

Um eine störungsfreie Gleitführung der bewegten Teile zu gewährleisten und unerwünschte Quietsch-Geräusche zu verhindern, ist in einer besonderen Ausgestaltung der Erfindung vorgesehen, daß die Gleitführungen auf der auslaufenden Seite der Bremse jeweils aus Keil/Nut-Anordnungen gebildet sind.

Da beim normalen Bremsvorgang die an der umlaufenden Bremsscheibe erzeugten Kräfte auf die auslaufende Seite der Bremse und von dort auf den fahrzeugfesten Bremsträger übertragen werden, bewirkt die erfindungsgemäß vorgesehene Keil/Nut-Anordnung, daß die bewegten Teile, also zum einen der Schwimmsattel mit einem der Bremsbacken und zum anderen der Kolben (bzw. der mit ihm fest verbundene Schlitten) mit dem anderen Bremsbacken, ohne Spiel paßgenau in bezug auf den ortsfesten Bremsträger geführt sind.

In einer bevorzugten Ausgestaltung der Erfindung ist vorgesehen, daß am Kolben bzw. einem fest mit diesem verbundenen Schlitten und am Schwimmsattel auf der auslaufenden Seite der Bremse jeweils ein keilförmiger Führungsstift befestigt ist, der in eine komplementär geformte Nut eingreift, die im Bremsträger oder in einem mit diesem fest verbundenen Zwischenstück aus insbesondere gehärtetem Stahl ausgeformt ist.

Auf der einlaufenden Seite der Bremse sind bevorzugt als Gleitführungen keine Keil/Nut-Anordnungen vorgesehen, sondern zwischen dem Kolben bzw. dem fest mit diesem verbundenen Schlitten sowie dem Schwimmsattel und dem Bremsträger jeweils zylindrische Führungsstifte angeordnet, die am Bremsträger befestigt sind und in komplementär geformte Nuten im Kolben bzw. dem fest mit diesem verbundenen Schlitten und im Schwimmsattel oder einem fest mit diesem verbundenen Zwischenstück eingreifen.

Die gemäß einer Variante der Erfindung vorgesehenen Zwischenstücke in den Gleitführungen können aus gehärtetem Material gefertigt sein, so daß die Belastbarkeit und Lebensdauer der Bremse verbessert ist.

In einer bevorzugten Ausgestaltung der Erfindung ist vorgesehen, daß auf der einlaufenden Seite zwischen dem Bremsträger oder den Führungsstiften und dem Schwimmsattel sowie dem Kolben Federn angeordnet sind, die den Schwimmsattel bzw. den Kolben in Richtung auf die auslaufende Seite der Bremse vorspannen.

Somit sind alle bewegten Teile der Bremse (Schwimmsattel, Bremsbacken, Kolben und Schlitten) permanent in Richtung auf die auslaufende Seite der Bremse vorgespannt, so daß kein Wackeln oder Quietschen auftreten kann.

In einer Weiterbildung der Erfindung ist vorgesehen, daß ein an sich bekannter Belaghaltebügel U-förmig derart ausgestaltet ist, daß sich seine Schenkel so biegen, daß auf der einlaufenden Seite der Bremse die die Gleitführungen bildenden Bauteile auf der einen Seite der Bremsscheibe in entgegengesetzter Richtung vorgespannt sind als auf der anderen Seite der Bremsscheibe.

Solange Schwimmsattel-Teilbelag-Scheibenbremsen nicht fest im Fahrzeug montiert sind, besteht die Gefahr, daß der Schwimmsattel sich gegenüber dem Bremsträger beim Handhaben der Bremse verschiebt. Diese Gefahr besteht insbesondere beim Transport und der Montage der Bremse. Um dieser Gefahr zu begegnen, ist bei einer bevorzugten Ausgestaltung der Erfindung vorgesehen, daß zumindest ein Teil der nutförmigen Ausnehmungen an ihren Böden jeweils mit einer weiteren, schmaleren und axial begrenzten Nut versehen ist, in welche jeweils ein schmaler Zapfen des zugeordneten Führungsstiftes eingreift, so daß Relativbewegungen zwischen dem Schwimmsattel und dem Bremsträger sowie zwischen dem Kolben und dem Bremsträger begrenzt sind. Der schmale Zapfen und die weitere, axial begrenzte Nut bilden nicht die Abstützung, welche ausschließlich durch die Führungsstifte und die nutförmigen Ausnehmungen selbst erzeugt wird.

Es ist bekannt, daß es bei Schwimmsattel-Teilbelag-Scheibenbremsen zu einem ungleichmäßigen Verschleiß der Bremsbeläge aufgrund von Drehmomenten um die Achse der Bremse kommen kann. Dieser schräge Verschleiß der Bremsbeläge ist in der DE-PS 12 38 284 ausführlich beschrieben. Die vorstehend beschriebene, erfindungsgemäße Abstützung der Belag-Trägerplatten hat den Vorteil, daß den ungleichmäßigen Verschleiß der Bremsbeläge bestimmende Hebelarme unabhängig vom momentanen Belagverschleiß sind, d.h. die Hebelarme sind über den gesamten Belagverschleiß der Bremse konstant. Die Erfindung gibt auch unter Ausnutzung dieses Vorteiles an, um welchen Betrag die Achsen der Trägerplatten gegeneinander versetzt werden müssen, um einen ungleichmäßigen Abrieb der Beläge zu verhindern.

Nachfolgend werden Ausführungsbeispiele der Erfindung anhand der Zeichnung näher beschrieben. Es zeigt:

Fig. 1 eine Draufsicht auf eine Schwimmsattel-Teilbelag-Scheibenbremse, teilweise im Schnitt;
Fig. 2 einen gegenüber dem Ausführungsbeispiel gemäß Fig. 1 abgewandelten Kolben;
Fig. 3 eine Seitenansicht der in Fig. 1 gezeigten Schwimmsattel-Teilbelag-Scheibenbremse, teilweise geschnitten;
Fig. 4 einen Führungsstift in vergrößertem Maßstab;
Fig. 5 eine Draufsicht auf ein anderes Ausführungsbeispiel einer Schwimmsattel-Teilbelag-Scheibenbremse, teilweise im Schnitt;
Fig. 6 eine Seitenansicht der in Fig. 5 gezeigten Scheibenbremse, teilweise im Schnitt;
Fig. 7 eine Draufsicht auf ein weiteres Ausführungsbeispiel einer Schwimmsattel-Teilbelag-Scheibenbremse, teilweise im Schnitt;
Fig. 8 eine Seitenansicht der in Fig. 7 gezeigten Scheibenbremse, teilweise im Schnitt;
Fig. 9 eine bevorzugte Ausgestaltung der Führungsstifte und Nuten;
Fig. 9a ein Detail aus Fig. 9 im Schnitt entlang der Linie A-B; und
Fig. 10 die axiale Versetzung der kolbenseitigen Belag-Trägerplatten.

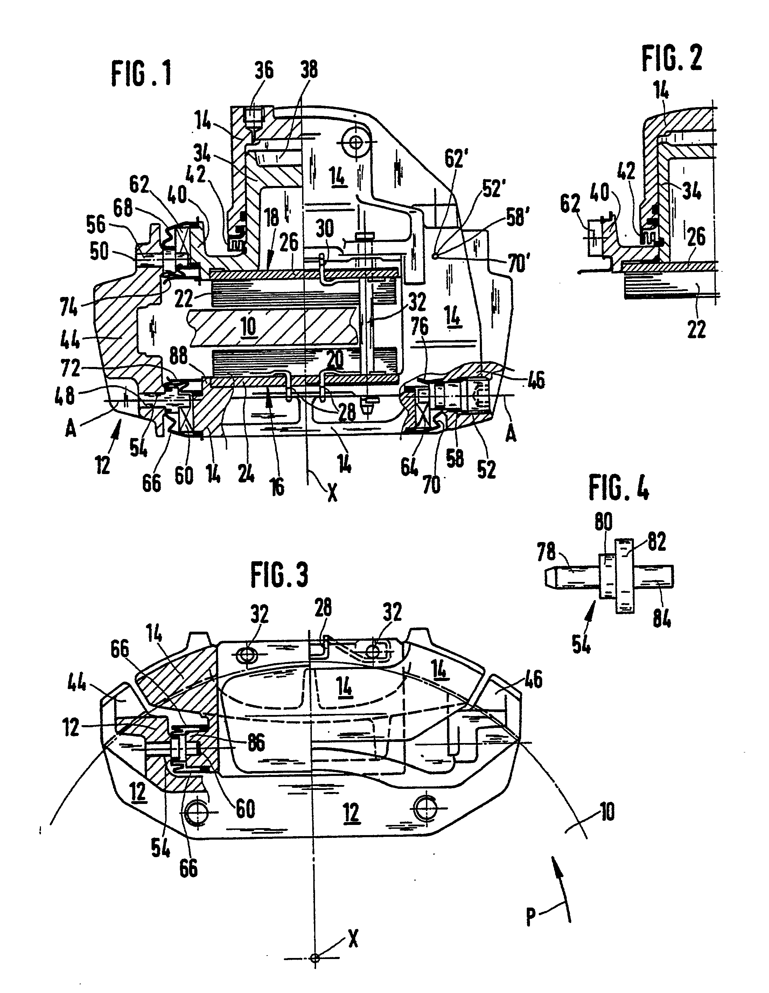

Fig. 1 zeigt im Horizontalschnitt eine Bremsscheibe 10, einen fahrzeugfesten Träger 12 und einen Schwimmsattel 14. Zwei Bremsbacken 16, 18 sind beidseits an die Bremsscheibe 10 anlegbar. Die Bremsbacken 16, 18 weisen jeweils einen Bremsbelag 20 bzw. 22 und eine Trägerplatte 24 bzw. 26 auf. Mittels einer Trägerplatten-Haltefeder 28 ist der in Fig. 1 untere Bremsbacken 16 am Schwimmsattel 14 gehalten, während der in Fig. 1 oben gezeichnete Bremsbacken 18 mittels einer Haltefeder 30 am Kolben 34 einer (an sich bekannten) Kolben-Zylinder-Anordnung befestigt ist. Ebenfalls der Befestigung der Bremsbacken 16, 18 dienen sich parallel zur Achse X der Bremsscheibe 10 erstreckende Stifte 32 (s.a. Fig. 3).

Ein Einlaß 36 für Hydraulikflüssigkeit führt zur Kammer 38 der Kolben-Zylinder-Anordnung, so daß der Kolben 34 parallel zur Achse X in Richtung auf die Bremsscheibe 10 bewegbar ist. Beim Anlegen des durch den Kolben 34 direkt beaufschlagten Bremsbackens 18 an die Bremsscheibe 10 wird in bekannter Weise durch die Reaktionskräfte über den Schwimmsattel 14 auch der gegenüberliegende Bremsbacken 16 an die Bremsscheibe 10 gedrückt.

Mit dem Kolben 34 ist ein Bauteil 40 fest verbunden, welches als Schlitten bezeichnet werden kann. Beim in Fig. 1 gezeigten Ausführungsbeispiel ist der Schlitten 40 integral mit dem Kolben 34 ausgebildet. Fig. 2 zeigt eine Abwandlung dieses Ausführungsbeispieles, bei der der Schlitten 40 an den in herkömmlicher Weise ausgebildeten Kolben 34 angeschweißt ist. Ein elastischer Dicht-Balg 42 dichtet die Gleitfläche zwischen dem Kolben 34 und dem Schwimmsattel 14 ab.

Der fahrzeugfeste Brems-Träger 12 weist zwei die Bremsscheibe oben überragende (s. Fig. 3) Träger-Arme 44, 46 auf. In den Träger-Armen 44, 46 sind Ausnehmungen 48, 50, 52 und 52' wie dargestellt beidseits der Bremsscheibe 10 vorgesehen. In Fig. 1 sind nur drei Ausnehmungen 48, 50 und 52 im Schnitt dargestellt, während die vierte Ausnehmung 52', welche der gezeigten Ausnehmung 52 entspricht, durch den Schwimmsattel 14 abgedeckt ist.

In den Ausnehmungen 48, 50, 52 und 52' sind jeweils Führungsstifte 54, 56, 58 und 58' (der in der Ausnehmung 52' angeordnete Führungsstift 58' ist nicht gezeigt) befestigt. Gemäß Fig. 1 ragen die aus den Träger-Armen 44, 46 vorstehenden Abschnitte der Führungsstifte 54, 56 und 58 in Nuten 60 (s.a. Fig. 3), 62 und 64 (dem nicht gezeigten Führungsstift 58' entspricht eine nicht gezeigte Nut 62' entsprechend der Nut 64). Die dem indirekt betätigten Bremsbacken 16 zugeordneten Führungsstifte 54, 58 (in Fig. 1 unterhalb der Bremsscheibe 10) ragen in Führungsnuten 60, 64, welche im Schwimmsattel 14 ausgebildet sind. Der Schwimmsattel 14 ist somit parallel zur Achse X der Bremsscheibe 10 verschiebbar.

Die dem direkt betätigten Bremsbacken 18 zugeordneten Führungsstifte 56 und 58' (welcher dem Führungsstift 58 entspricht und nicht gezeigt ist) ragen in Nuten 62, 62' (nicht gezeigt), welche im Schlitten 40 des Kolbens 34 ausgebildet sind, so daß bei Erzeugung eines Hydraulik-Druckes in der Kammer 38 der Kolben 34 relativ zum Träger 12 sowie seiner Arme 44, 46 parallel zur Achse X bewegbar ist.

Elastische Manschetten 66, 68 und 70 (die dem Führungsstift 58' zugeordnete Manschette 70' ist nicht gezeigt) decken die Gleit-Führungen aus den Führungsstiften 54, 56, 58 und 58' und den Nuten 60, 62, 64 und 62' ab, so daß die Gleit-Führungen nicht verschmutzen können und auch das Eindringen von Wasser verhindert ist, welches den Rostfraß fördert.

Fig. 3 zeigt einen Teil-Schnitt entlang der Linie A-A der Fig. 1. Der Pfeil P deutet die Drehrichtung der Bremsscheibe 10 bei Vorwärtsfahrt des Kraftfahrzeuges an. Die Führungsstifte 58, 58' sind auf der einlaufenden Seite der Bremse wesentlich größer als die Führungsstifte 54, 56 auf der auslaufenden Seite der Bremse. Die Bohrungen 48, 50 für die Führungsstifte 54, 56 auf der auslaufenden Seite weisen über ihre gesamte Länge einen gleichen Durchmesser auf, in welche der Abschnitt 78 der Führungsstifte (Fig. 4) paßgenau einpreßbar ist. Ein im Durchmesser vergrößerter Abschnitt 80 der Führungsstifte schlägt an den Träger-Arm 44 an und dient auch als Sitz für die Manschetten 66, 68. Ein weiterer Abschnitt 82 der Führungsstifte der auslaufenden Seite der Bremse weist einen gegenüber dem Abschnitt 80 vergrößerten Durchmesser auf und klemmt den Sitz der Manschetten ein. Auf der anderen Seite stößt der Abschnitt 82 mit vergrößertem Durchmesser gemäß Fig. 3 beidseits der Nuten 60 bzw. 62 gegen den Schwimmsattel 14 bzw. den Schlitten 40. Ein Abschnitt 84 der Führungsstifte auf der auslaufenden Seite der Bremse ragt in die Nuten 60 bzw. 62.

Schutzbleche 72, 74 und 76 (das dem Führungsstift 58' zugeordnete Schutzblech ist nicht gezeigt) schützen die Manschetten vor übermäßiger Erhitzung beim Heißlaufen der Bremse. Die Schutzbleche umschließen die Manschetten nicht vollständig, damit sich der Zwischenraum nicht mit Schmutz zusetzen kann.

Auf der einlaufenden Seite der Bremse (s. Pfeil P in Fig. 3) sind die Ausnehmungen 52, 52' im Träger-Arm 46 größer als die Ausnehmungen 48, 50, welche auf parallel zur Bremsscheibenebene verlaufenden Achsen jeweils mit den erstgenannten Ausnehmungen 52, 52' fluchten (Fig. 1). Durch die vergrößerten Durchmesser auf der einlaufenden Seite ist eine maschinelle Montage der Führungszapfen auf der auslaufenden Seite möglich (die Verhältnisse können auch umgekehrt werden).

Die Führungsstifte 54, 56, 58 und 58' sind rotationssymmetrisch und können als Kaltfließ-Preßteile preisgünstig hergestellt werden. Die auf der einlaufenden Seite der Bremse angeordneten Führungsstifte 58, 58' sind ähnlich den in Fig. 4 gezeigten Führungsstiften der auslaufenden Seite, weisen jedoch ein Gewinde und einen Innen-Sechskant an ihren von der Bremsenmitte abgekehrten Seiten auf. Die auf der einlaufenden Seite der Bremse angeordneten Führungsstifte übertragen bei Rückwärtsfahrt die an der Bremsscheibe 10 erzeugte Reibungskraft über das Gewinde auf den Träger-Arm 46.

Durch Verdrehen der auf der einlaufenden Seite der Bremse (in den Fig. 1 und 3 rechts) angeordneten Führungsstifte 58, 58' kann deren Position relativ zum Träger-Arm 46 genau eingestellt werden. Hierdurch ist es möglich, das Spiel zwischen dem Schwimmsattel 14 und dem fahrzeugfesten Träger 12 genau einzustellen. Das Gewinde an den Führungsstiften 58, 58' ist selbstsichernd. In vereinfachter Ausführung können auch statt der einstellbaren Führungsstifte auf der einlaufenden Seite die gleichen Führungsstifte eingesetzt werden wie auf der auslaufenden Seite.

Gemäß Fig. 3 weist der Schwimmsattel 14 den Führungsstiften gegenüberliegend Ansätze 86 auf, in denen die Nuten 60, 62, 62' und 64 ausgebildet sind und welche die Manschetten 66, 68, 70 (sowie die nicht gezeigte Manschette 70') tragen. Der Schwimmsattel 14 kann um die Längsachsen A der Führungsstifte 54, 58 schwenken. Der Schwimmsattel 14 ist auf der Seite des indirekt betätigten Bremsbackens 16 mit Ansätzen 88 versehen, in welchen die Trägerplatte 24 dieses Bremsbackens eingepaßt ist.

Entsprechend dem Schwimmsattel 14 ist auch gegenüberliegend der Kolben 34 mit seinem Schlitten 40 um die Längsachsen der ihm zugeordneten Führungsstifte 56, 58' schwenkbar, so daß in jedem Falle eine genaue Anpassung der Bremsbeläge 20, 22 an die Position der Bremsscheibe 10 gegeben ist.

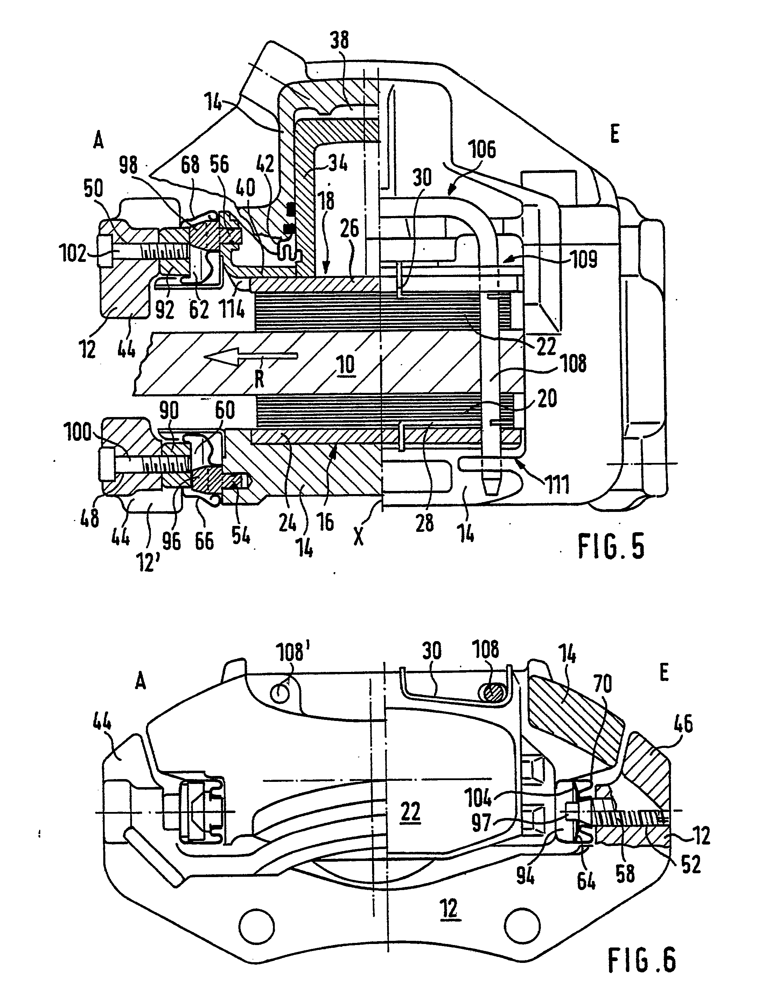

Die in den Fig. 5-8 gezeigten Schwimmsattel-Teilbelag-Scheibenbremsen entsprechen in ihrer Grundstruktur insbesondere hinsichtlich der Abstützung der Bremsbacken, dem Ausführungsbeispiel gemäß den Fig. 1-4. Funktionsgleiche Teile sind mit gleichen Bezugszeichen versehen, so daß auf die obige Beschreibung verwiesen werden darf. Unterschiedlich sind aber die Einzelheiten der Gleitführungen.

Gemäß den Fig. 5-8 weist der fahrzeugfeste Bremsträger 12 zwei die Bremsscheibe 10 oben überragende Träger-Arme 44, 46 auf. Im in Fig. 5 links gezeichneten Trägerarm 44 sind Ausnehmungen 48, 50 beidseits der Bremsscheibe 10 vorgesehen. Auf der einlaufenden Seite E der Bremse sind im gegenüberliegenden Trägerarm 46 ebenfalls zwei Ausnehmungen 52 (nur eine gezeigt) vorgesehen. Die der gezeigten Ausnehmung 52 im Trägerarm 46 entsprechende weitere, nicht gezeigte Ausnehmung befindet sich auf der anderen Seite der Bremsscheibe 10 und ist etwa symmetrisch in bezug auf die Bremsscheibe zur gezeigten Ausnehmung 52 angeordnet. In Fig. 5 sind die beiden Ausnehmungen 52 durch den Schwimmsattel 14 abgedeckt.

Auf der auslaufenden Seite A der Bremse sind zwei Führungsstifte 54, 56 vorgesehen. Der in Fig. 5 unten gezeichnete Führungsstift 54 ist direkt am Schwimmsattel 14 befestigt. Der in Fig. 5 oben gezeichnete Führungsstift 56 ist am Schlitten 40 des Kolbens 34 befestigt.

Auf der einlaufenden Seite E der Bremse sind zwei weitere Führungsstifte 58 (nur einer in Fig. 6 gezeigt) angeordnet. Diese Führungsstifte sind in den vorstehend beschriebenen Ausnehmungen 52 mittels Gewindes befestigt.

Die auf der auslaufenden Seite A der Bremse vorgesehenen Führungsstifte 54, 56 sind im Vertikalschnitt (gemäß Fig. 6) keilförmig mit einem Keilwinkel im Bereich von 90° bis 120° ausgeformt. Die derart gebildeten keilförmigen Spitzen 96, 98 der Führungsstifte 54, 56 greifen in komplementär ausgeformte Nuten 60, 62, die in Zwischenstücken 90, 92 ausgeformt sind.

Auf der einlaufenden Seite E der Bremse greifen die Führungsstifte 58 mit zylinderförmigen Spitzen 97 (nur eine in Fig. 6 gezeigt) in komplementär ausgebildete Nuten in Zwischenstücken 94 (nur eines in Fig. 6 gezeigt), welche in Fig. 5 unten am Schwimmsattel 14 und in Fig. 5 oben am Schlitten 40 des Kolbens 34 befestigt sind.

Die vier Führungsstifte 54, 56, 58 (letzterer nur einmal gezeigt) sind somit in den Nuten 60, 62, 64 (letztere nur einmal gezeigt) in Richtung der Achse X verschiebbar. Durch die keilförmige Ausgestaltung der Spitzen 96, 98 der Führungsstifte 54, 56 auf der auslaufenden Seite A der Bremse ist ein paßgenaues Anliegen der Führungen gewährleistet, so daß eine spielfreie Anlage der geführten Teile in allen Richtungen gewährleistet ist.

Auf der auslaufenden Seite A der Bremse sind die Zwischenstücke 90, 92, in denen die V-förmigen Nuten 60, 62 der Gleitführungen ausgeformt sind, mittels Halteschrauben 100, 102 am Arm 44 des ortsfesten Bremsträgers 12 befestigt.

Auf der einlaufenden Seite E der Bremse sind gemäß Fig. 6 Tellerfedern 104 (nur eine gezeigt) vorgesehen, um den Bremssattel 14 bzw. den Kolben 34 mit dem Schlitten 40 auf die auslaufende Seite A der Bremse zu drücken. Die Tellerfedern 104 stützen sich an einem Absatz der Führungsstifte 58 ab und drücken gegen die Zwischenstücke 94 (in Fig. 6 nur eines gezeigt), so daß in den Fig. 5 und 6 der Bremssattel 14 mittels der gezeigten Tellerfeder 104 und der Kolben 34 mit seinem Schlitten 40 mittels der nicht gezeigten Tellerfeder nach links gedrückt werden.

Elastische Manschetten 66, 68, 70 sowie eine weitere, der Manschette 70 entsprechende, schützen die Gleitführungen gegen Schmutz und Feuchtigkeit.

Ein Belaghaltebügel 106 ist U-förmig ausgebildet und übergreift mit seinen beiden Schenkeln 108, 108' die Bremsscheibe 10 (Fig. 5 und 6). Wie der rechten Hälfte der Fig. 5 zu entnehmen ist, erstreckt sich der Schenkel 108 des Belaghaltebügels 106 durch Bohrungen bei 109 in dem Schlitten 40 sowie in der Trägerplatte 26 des Bremsbackens 18 und durch Bohrungen bei 111 in der Trägerplatte 24 des gegenüberliegenden Bremsbackens 16 sowie in dem Schwimmsattel 14. Gemäß den Fig. 5 und 6 greift die auf der Innenseite der Bremse angeordnete Haltefeder 30 unter den Schenkel 108 des U-förmigen Haltebügels 106 und stützt sich an ihren umgebogenen Enden am Schlitten 40 ab. Die auf der Außenseite der Bremse angeordnete Haltefeder 28 stützt sich an einem Ende an der Trägerplatte 24 des Bremsbackens 16 und mit ihrem anderen Ende am Schenkel 108 des Belaghaltebügels 106 ab. Entsprechendes gilt für den Schenkel 108' auf der linken Seite der Bremse (nicht gezeigt).

Der Schenkel 108 des U-förmigen Belaghaltebügels 106 ist so gebogen, daß er nach dem Einführen in die Bohrungen im Schlitten 40, in den Trägerplatten sowie im Schwimmsattel 14 auf der einlaufenden Seite eine Verdrehung der beiden Gleitführungen derart bewirkt, daß die auf der einlaufenden Seite E innenseitige Nut 64 der Gleitführung beispielsweise nach unten und die auf der einlaufenden Seite außenseitige Nut in umgekehrter Richtung vorgespannt sind, so daß auch auf der einlaufenden Seite eine völlig spielfreie Lagerung gegeben ist.

Die beiden Führungsstifte 58 auf der einlaufenden Seite E der Bremse sind mittels Gewinde gegenüber dem ortsfesten Bremsträger 12 verstellbar. Das axiale Spiel des Schwimmsattels 14, bezogen auf die Achse der Führungsstifte 58, wird durch Drehen der Führungsstifte 58 auf etwa 0,05 bis 0,2 mm eingestellt. Die Tellerfedern 104 drücken dann, wie oben beschrieben, die keilförmigen Führungen auf der auslaufenden Seite A der Bremse spielfrei ineinander.

Radial in bezug auf die Achsen der Führungsstifte 58 ist ein Spiel von etwa 0,02 bis 0,1 mm gegeben. Dieses Spiel wird durch den Belaghaltebügel 106 in der beschriebenen Weise aufgehoben.

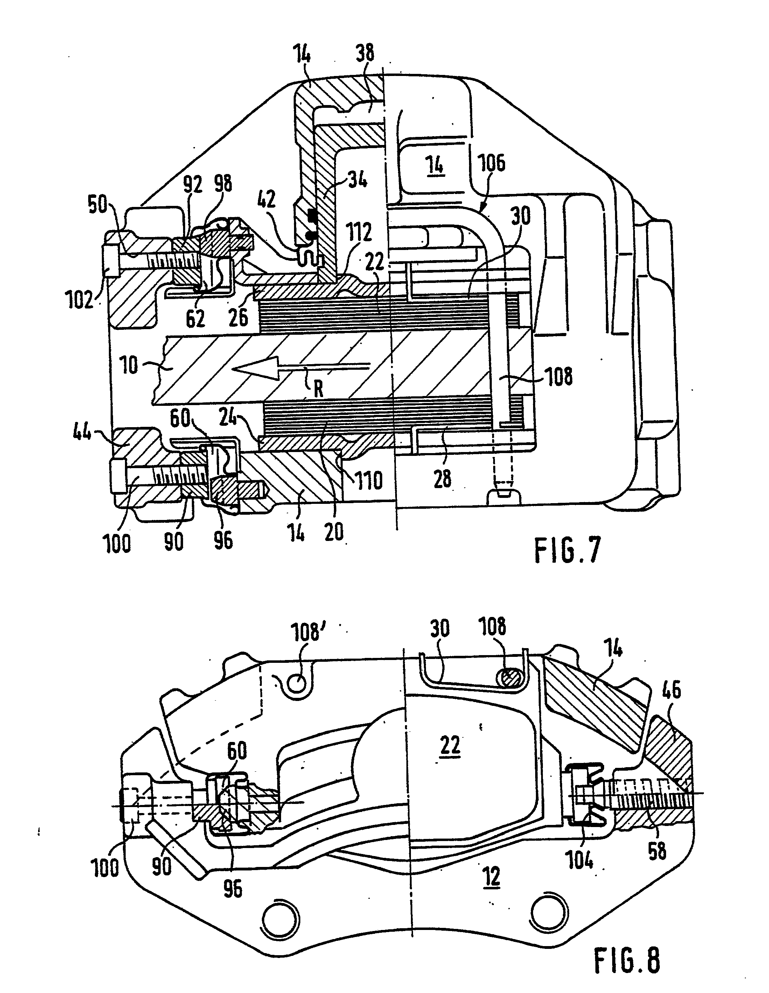

Die Fig. 7 und 8 zeigen ein weiteres Ausführungsbeispiel einer Schwimmsattel-Teilbelag-Scheibenbremse, das sich vom in den Fig. 5 und 6 gezeigten Ausführungsbeispiel nur durch die Befestigung der Trägerplatten 24, 26 am Schwimmsattel bzw. am Kolben 34 unterscheidet. Beim in den Fig. 5 und 6 gezeigten Ausführungsbeispiel ist eine Ausnehmung im Schwimmsattel 14 vorgesehen, welche die zugehörige Trägerplatte 24 paßgenau aufnimmt und die dem Kolben 34 zugeordnete Trägerplatte 26 des gegenüberliegenden Bremsbackens 18 ist mittels eines Anschlages 114 mit dem Kolben verbunden.

Beim in den Fig. 7 und 8 gezeigten Ausführungsbeispiel ist hingegen jeweils an den Trägerplatten 24, 26 durch Eindrücken derselben ein Anschlag 110 bzw. 112 gebildet, welcher in eine Ausnehmung im Schwimmsattel 14 bzw. im Kolben 34 eingreift. Im übrigen entspricht die Scheibenbremse gemäß den Fig. 7 und 8 derjenigen gemäß den Fig. 5 und 6 und funktionsgleiche Bauteile sind mit gleichen Bezugszeichen versehen.

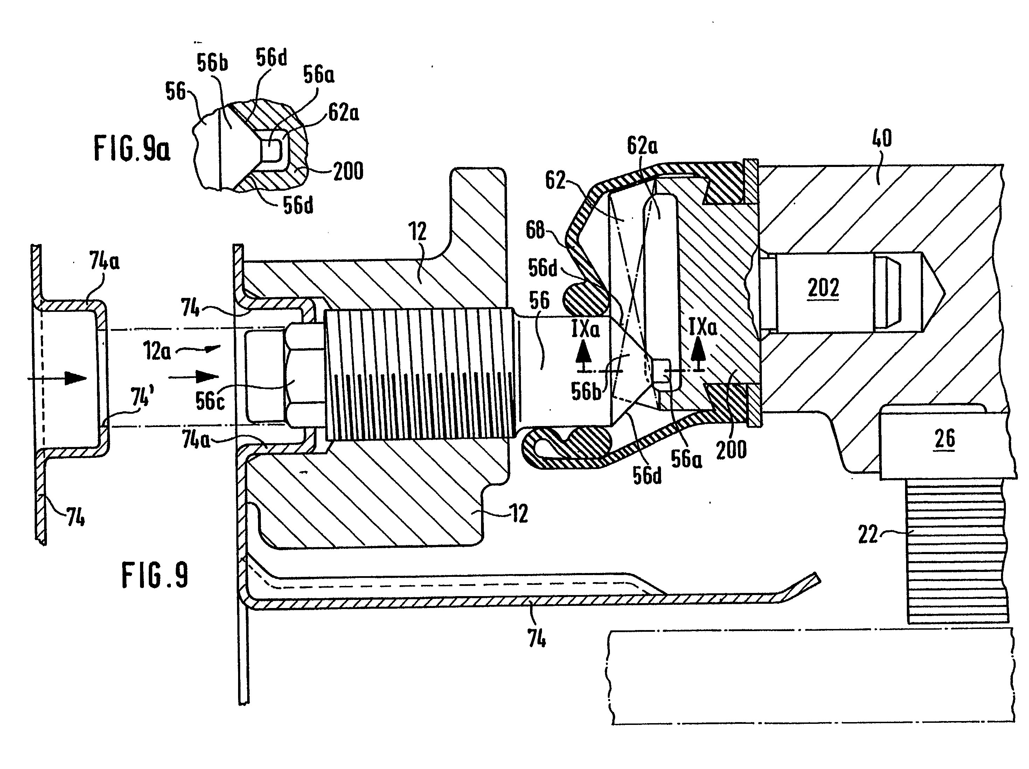

Fig. 9 zeigt eine bevorzugte Ausgestaltung der Führungsstifte und Nuten, die verhindern soll, daß insbesondere beim Transport und der Lagerung der Schwimmsattel-Teilbelag-Scheibenbremse der Schwimmsattel aus dem Bremsträger herausrutschen kann.

Das in Fig. 9 gezeigte Ausführungsbeispiel unterscheidet sich von den zuvor beschriebenen Ausführungsbeispielen u.a. dadurch, daß im Schlitten 40 (oder auch im Schwimmsattel 14 (in Fig. 9 nicht gezeigt)) ein gesondertes Gleitstück 200 mittels eines paßgenauen Zapfens 202 befestigt ist. Die Nut 62 ist im Gleitstück 200, welches aus gehärtetem Material gefertigt ist, vorgesehen. An ihrem Boden ist die Nut 62 mit einer weiteren, schmaleren Nut 62a versehen, die in axialer Richtung begrenzt ist (Fig. 9). Der Führungsstift 56 greift mit dem Abschnitt 56b in die Nut 62. Am in die Nut 62 eingreifenden Abschnitt 56b ist zusätzlich noch ein kleiner Zapfen 56a (siehe auch Fig. 9a) vorgesehen, welcher in die weitere, schmalere Nut 62a eingreift. Dieser Zapfen 56a bewirkt keine direkte Abstützung zwischen dem Schlitten 40 (bzw. dem Schwimmsattel 14), sondern dient ausschließlich dazu, zu verhindern, daß bei der Lagerung oder beim Transport der Führungsstift 56 in axialer Richtung aus der Nut 62 herausrutschen kann.

Fig. 9 zeigt gegenüber den zuvor beschriebenen Ausführungsbeispielen gemäß den Fig. 1-8 eine Variante hinsichtlich des Schutzbleches 74. Wie gezeigt, ist der Bremsträger 12 mit einer Ausnehmung 12a versehen, in welche der Führungsstift 56 versenkt ist. Ein Sechskant 56c des Führungsstiftes 56 liegt in montiertem Zustand der Bremse vollständig in der Ausnehmung 12a. Gemäß Fig. 9 ist das Schutzblech 74 mit einer Ausbauchung 74a versehen, die in die Ausnehmung 12a im Bremsträger 12 eingreift und mit einer Öffnung 74' versehen ist, welche auf den Sechskant 56c des Führungsstiftes 56 aufgepreßt wird.

Fig. 9a zeigt diejenigen Abschnitte des Führungsstiftes 56, die in die Nut 62 und in die schmalere zusätzliche Nut 62a eingreifen. Gemäß Fig. 9a hat der Zapfen 56a am Führungsstift 56 keine Berührung mit einer Fläche der schmalen Nut 62a. Die Abstützung zwischen dem Führungsstift 56 und dem Gleitstück 200 (s.a. Fig. 9) erfolgt ausschließlich über die Flanken 56d des Abschnittes 56b des Führungsstiftes 56. Nur diese Flanken 56d des Führungsstiftes kommen mit den Wänden der Nut 62 zur Anlage (s.a. die in den Fig. 1-8 beschriebenen Ausführungsbeispiele). In einer besonderen Ausführungsform der Führungsstifte 56 sind die Flanken 56d tonnenförmig gestaltet, d.h. die Flanken 56d sind nicht geradlinig, sondern gekrümmt. Der große Radius der die Flanken 56d definierenden Tonne liegt in der Größenordnung von 150 mm. Hierdurch wird bewirkt, daß der Führungsstift 56 nicht linienförmig an den Wänden der Nut 62 anliegt, sondern daß eine Punktberührung erfolgt. Tonnenförmige Lagerungen sind als solche bekannt. Bei Schwimmsattel-Teilbelag-Scheibenbremsen haben derartige tonnenförmige Ausgestaltungen der Flanken 56d des Führungsstiftes 56 den Vorteil, daß bei Verformungen des Schlittens 40 bzw. des Schwimmsattels 14 eine gute Lagerung gegeben ist.

Bei den bisher beschriebenen Ausführungsbeispielen ist noch nicht berücksichtigt, daß es beim Bremsen (d.h. beim Anlegen der Bremsbeläge 20, 22 an die Bremsscheibe 10) zu Drehmomenten an den Belag-Trägerplatten 24, 26 kommt, durch die eine Verkantung der Belag-Trägerplatten in bezug auf die Achse X der Bremse erfolgen kann. Hierdurch kommt es zu einem ungleichmäßigen (schrägen) Verschleiß der Bremsbeläge, wie es in der DE-C 12 38 284 beschrieben ist.

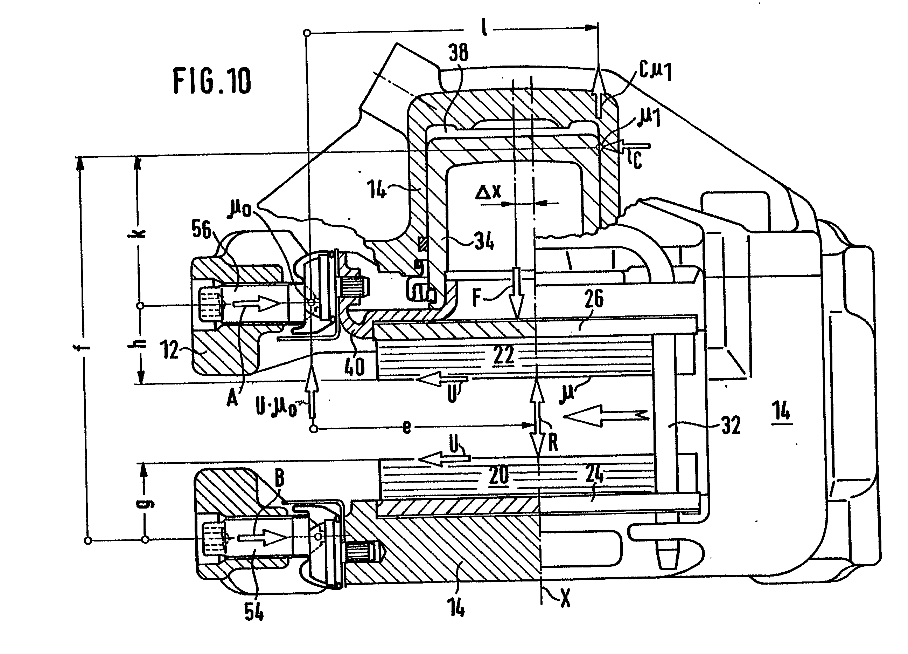

Die erfindungsgemäße Abstützung der Belag-Trägerplatten ausschließlich am Schwimmsattel bzw. aussschließlich am Kolben der Kolben-Zylinder-Anordnung sowie die Lehre, zwischen dem Kolben 34 oder dem fest mit ihm verbundenen Schlitten 40 und dem Bremsträger 12 eine weitere Gleit-Führung 56, 62, 58', 62' vorzusehen, hat den Vorteil, daß gemäß Fig. 10 die Hebelarme "h" und "g" zwischen den Reibflächen der Beläge 20, 22 und den zugehörigen Abstützungen an den Führungsstiften 54, 56 (für die übrigen Abstützungen auf der gegenüberliegenden Seite gilt entsprechendes) vom momentanen Verschleiß der Beläge 20, 22 unabhängig sind, d.h. die Hebelarme "h" und "g" bleiben über den gesamten Belagverschleiß konstant. Aus diesem Grunde ist es möglich, die sogenannte Kolbendesachsierung vorzunehmen, d.h. die Versetzung der Achse des Kolbens 34 in bezug auf die Achse X der Bremse. Diese Versetzung ist in Fig. 10 mit x bezeichnet. Die Kolbendesachsierung $\Delta x$ läßt sich wie folgt berechnen, wobei alle wesentlichen Größen in Fig. 10 gezeichnet sind.

Die Umfangsreibkraft U ergibt sich aus U=Rxµ. F sei die Kolbenspannkraft. Die der Kolbenspannkraft F entsprechende Reaktionskraft R ist in Fig. 10 eingezeichnet und wirkt auf die Belag-Mitte, damit der Verschleiß symmetrisch ist. Mit A ist die Abstützkraft auf der Innenseite des Bremsträgers bezeichnet, während mit B die Abstützkraft an der Außenseite des Brems-Trägers bezeichnet ist. C ist die am Kolben 34 wirkende Abstützkraft. Die äußere Umfangskraft aufgrund der Bremsreibung erzeugt mit dem Hebel-Radius "g" ein Drehmoment am Gehäuse, welches am Kolben 34 einen Anschlag findet. Für die Kraft C ergibt sich:

$$C = \frac{U \cdot g}{f} \qquad\qquad (0)$$

Ist µ der Reibwert des Belages; $gm_0$ der Reibwert zwischen der gefetteten und abgedichteten Abstützung (zwischen dem Führungsstift und der Nut) und $\mu_1$ der Reibwert des Kolbens 34 in der Kammer 38, so gilt folgendes:

$$U = R \cdot \mu \quad (1)$$

$$R = F - U \cdot \mu_0 \quad (2)$$

Einsetzen von Gleichung (1) in Gleichung (2) ergibt:

$$R = \frac{F}{1 + \mu \cdot \mu_0} \qquad\qquad (3)$$

Einsetzen von Gleichung (1) und (3) in die obenstehende Gleichung (0) ergibt folgendes:

$$C = \frac{F \cdot \mu}{1 + \mu \cdot \mu_0} \cdot \frac{g}{f} \qquad\qquad (5)$$

Einsetzen von Gleichung (3) in Gleichung (1) ergibt:

$$U = \frac{F \cdot \mu}{1 + \mu \cdot \mu_o} \qquad (6)$$

Damit keine Verkantung erfolgt, müssen alle Drehmomente um den Abstützpunkt "A" im Gleichgewicht sein, d.h. die Summe aller Drehmomente muß gleich 0 sein, d.h.

$$\Sigma\ M_A = 0$$

$$\Sigma\ M_A = U \cdot h + F(e-x) - R \cdot e - C \cdot k - C \cdot \mu_1 \cdot 1 = 0$$

$$= \frac{F \cdot \mu}{1+\mu \cdot \mu_o} \cdot h + F \cdot e - F \cdot x - \frac{F}{1+\mu \cdot \mu_o} \cdot e - \frac{F \cdot \mu}{1+\mu \cdot \mu_o} \cdot \frac{g \cdot k}{f} - \frac{F \cdot \mu}{1+\mu \cdot \mu_o} \cdot \frac{g \cdot \mu_1 \cdot 1}{f} = 0$$

(F entfällt)

$$= -x + e + \frac{1}{1+\mu \cdot \mu_o} \left[ \mu \cdot h - e - \frac{g}{f}(\mu \cdot k + \mu \cdot \mu_1 \cdot 1) \right] = 0$$

$$\Delta x = e + \frac{1}{1+\mu \cdot \mu_o} \left[ \mu \cdot h - e - \frac{g}{f}(\mu \cdot k + \mu \cdot \mu_1 \cdot 1) \right]$$

$$\Delta x = e + \frac{\mu}{1+\mu \cdot \mu_o} \left[ h + \frac{e}{\mu} - \frac{g}{f}(k + \mu_1 \cdot 1) \right]$$

In einer Variante der Erfindung ist in Abwandlung des in Fig.1 gezeigten Ausführungsbespieles vorgesehen, daß die kolbenseitige Belag-Trägerplatte 26 vom Kolben nur in axialer Richtung, d.h. mit einer Klemmkraft beaufschlagt wird, daß aber die Abstützung in Umfangsrichtung der Belag-Trägerplatte 26 derart erfolgt, daß die Belag-Trägerplatte 26 direkt mittels einer Gleitführung am Träger 12 geführt ist, d.h. die weitere Gleit-Führung ist nicht zwischen dem Kolben 34 oder einem fest mit diesem verbundenen Bauteil 40 und dem Träger 12 vorgesehen, sondern direkt zwischen der Belag-Trägerplatte 26 und dem Träger 12.

**Patentansprüche**

1. Schwimmsattel-Teilbelag-Scheibenbremse für Kraftfahrzeuge mit
- einem Schwimmsattel (14), der in bezug auf einen fahrzeugfesten Träger (12) verschiebbar gelagert ist,
- zwei Bremsbacken (16, 18), welche die Bremsscheibe (10) beidseits beaufschlagen und auf ihren der Bremsscheibe abgekehrten Seiten Trägerplatten (24, 26) für Bremsbeläge (20, 22) aufweisen,
- einer hydraulischen Kolben-Zylinder-Anordnung (34) im Schwimmsattel (14), die einen der zwei Bremsbacken (16, 18) direkt und den anderen Bremsbacken über den Schwimmsattel (14) beaufschlagt, und
- einer Gleit-Führung (54, 60; 58, 64) zwischen dem Träger (12) und dem Schwimmsattel (14), dadurch **gekennzeichnet**, daß eine der Belag-Trägerplatten (24 oder 26) ausschließlich am Schwimmsattel (14) und die andere ausschließlich am Kolben (34) der Kolben-Zylinder-Anordnung abgestützt ist und daß zwischen dem Kolben (34) oder einem mit ihm fest verbundenen Bauteil (40) und dem Träger (12) eine weitere Gleit-Führung (56, 62; 58', 62') vorgesehen ist.

2. Schwimmsattel-Teilbelag-Scheibenbremse nach Anspruch 1, dadurch **gekennzeichnet**, daß die Gleit-Führung (54, 60; 58, 64) zwischen dem Träger (12) und dem Schwimmsattel (14) zwei Vorsprünge (54, 58) an einem dieser Bauteile und zwei Ausnehmungen (60, 64) im anderen Bauteil aufweist, in welchen die Vorsprünge (54, 58) senkrecht zur Ebene der Bremsscheibe (10) verschiebbar sind und daß die Gleit-Führung (56, 62) zwischen dem Kolben (34) bzw. dem mit diesem fest verbundenen Bauteil (40) und dem Träger (12) zwei Vorsprünge (56, 58') an einem dieser Bauteile und zwei Ausnehmungen (62, 62') im anderen Bauteil aufweist, in welchen die Vorsprünge senkrecht zur Ebene der Bremsscheibe (10) verschiebbar sind.

3. Schwimmsattel-Teilbelag-Scheibenbremse nach Anspruch 2, dadurch **gekennzeichnet**, daß als Vorsprünge jeweils Führungsstifte (54, 56, 58, 58') am Träger (12) befestigt sind, welche in nutförmige Ausnehmungen (60, 62, 62', 64) im Schwimmsattel (14) bzw. Kolben (34) oder dem damit fest verbundenen Bauteil (40) eingreifen.

4. Schwimmsattel-Teilbelag-Scheibenbremse nach Anspruch 1, dadurch **gekennzeichnet**, daß die Gleit-Führungen von elastischen Manschetten (66, 68, 70, 70') umschlossen sind.

5. Schwimmsattel-Teilbelag-Scheibenbremse nach Anspruch 1, dadurch **gekennzeichnet**, daß beidseits der Bremsscheibe (10) in Umfangsrichtung derselben beabstandet jeweils zwei Gleit-Führungen (54, 60; 56, 62; 58', 62'; 58, 64) vorgesehen sind, wobei die Gleit-Führungen (54, 60; 58, 64) zwischen dem Träger (12) und dem Schwimmsattel (14) auf der einen Seite der Bremsscheibe (10) und die Gleit-Führungen (56, 62; 58', 62') zwischen dem Träger (12) und dem Kolben (34) bzw. dem mit diesem verbundenen Bauteil (40) auf der anderen Seite der Bremsscheibe (10) angeordnet sind.

6. Schwimmsattel-Teilbelag-Scheibenbremse nach Anspruch 4, dadurch **gekennzeichnet**, daß die elastischen Manschetten (66, 68, 70, 70') zumindest auf ihrer den Bremsbelägen (20, 22) zugekehrten Seite von einem Schutzblech (72, 74, 76, 76') abgedeckt sind.

7. Schwimmsattel-Teilbelag-Scheibenbremse nach Anspruch 1, dadurch **gekennzeichnet**, daß am Schwimmsattel (14) bzw. Kolben (34) rotationssymmetrische Sitze für Schutz-Manschetten (66, 68, 70 und 70') vorgesehen sind.

8. Schwimmsattel-Teilbelag-Scheibenbremse nach Anspruch 1, dadurch **gekennzeichnet**, daß die Gleitführungen auf der auslaufenden Seite (A) der Bremse jeweils aus Keil/Nut-Anordnungen (60, 96; 62, 98) gebildet sind.

9. Schwimmsattel-Teilbelag-Scheibenbremse nach Anspruch 8, dadurch **gekennzeichnet**, daß am Kolben (34) bzw. einem fest mit diesem verbundenen Schlitten (40) und am Schwimmsattel (14) auf der auslaufenden Seite (A) der Bremse jeweils ein keilförmiger Führungsstift (54, 56) befestigt ist, der in eine komplementär geformte Nut (60 bzw. 62) eingreift, die im Bremsträger (12) oder in einem mit diesem fest verbundenen Zwischenstück (90 bzw. 92) aus insbesondere gehärtetem Stahl ausgeformt ist.

10. Schwimmsattel-Teilbelag-Scheibenbremse nach Anspruch 8, dadurch **gekennzeichnet**, daß auf der einlaufenden Seite (E) der Bremse die Gleitführungen (58, 64) zwischen dem Kolben (34) bzw. dem fest mit diesem verbundenen Schlitten (40) sowie dem Schwimmsattel (14) und dem Bremsträger (12) jeweils aus zylindrischen Führungsstiften (58) gebildet sind, die am Bremsträger (12) befestigt sind und in komplementär geformte Nuten (64) im Kolben bzw. dem fest mit diesem verbundenen Schlitten (40) und im Schwimmsattel (14) oder einem fest mit diesem verbundenen Zwischenstück (94) eingreifen.

11. Schwimmsattel-Teilbelag-Scheibenbremse nach Anspruch 10, dadurch **gekennzeichnet**, daß auf der einlaufenden Seite (E) zwischen dem Bremsträger (12) oder den Führungsstiften (58) und dem Schwimmsattel (14) sowie dem Kolben (34) Federn (104) angeordnet sind, die den Schwimmsattel bzw. den Kolben in Richtung auf die auslaufende Seite (A) der Bremse vorspannen.

12. Schwimmsattel-Teilbelag-Scheibenbremse nach Anspruch 2, dadurch **gekennzeichnet**, daß zumindest ein Teil der nutförmigen Ausnehmungen (60, 62, 62', 64) an ihren Böden jeweils mit einer weiteren, schmaleren und axial begrenzten Nut (60a, 62a, 62'a, 64a) versehen sind, in welche jeweils ein Zapfen (54a, 56a, 58a, 58'a) des zugeordneten Führungsstiftes (54, 56, 58, 58') eingreift.

13. Schwimmsattel-Teilbelag-Scheibenbremse nach Anspruch 2, dadurch **gekennzeichnet**, daß der in die nutförmigen Ausnehmungen (60, 62, 62', 64) eingreifende Abschnitt (54b, 56b, 58b, 58'b) der Führungszapfen (54, 56, 58, 58') tonnenflächenförmig ausgebildete Flanken (56d) aufweist.

14. Schwimmsattel-Teilbelag-Scheibenbremse nach Anspruch 1, dadurch **gekennzeichnet**, daß der Kolben (34) in bezug auf die Achse X der Bremse in tangentialer, auslaufender Richtung um eine Strecke Δx versetzt ist, die sich wie folgt bemißt:

$$\Delta x = e + \frac{\mu}{1 + \mu \cdot \mu_o} \left[ h + \frac{e}{\mu} \frac{g}{f} (k + \mu_1 \cdot l) \right]$$

wobei:

e der Abstand zwischen der Achse X und dem kolbenseitigen Abstützpunkt A der Trägerplatten ist;

$\mu$ der Reibungskoeffizient des Belages ist;

$\mu_o$ der Reibungskoeffizient der Abstützung ist;

$\mu_1$ der Reibungskoeffizient des Kolbens (34) ist;

h der Abstand zwischen der Reibungsfläche des kolbenseitigen Bremsbelages (22) und dem kolbenseitigen Abstützpunkt A ist;

g der Abstand zwischen der Reibungsfläche des schwimmsattelseitigen Bremsbelages (20) und dem schwimmsattelseitigen Abstützpunkt B ist;

k der Abstand zwischen dem kolbenseitigen Abstützpunkt A und der vom Gehäuse übertragenen Abstützkraft C des schwimmsattelseitigen Belages ist; und

f der Abstand zwischen der Abstützkraft C und dem schwimmsattelseitigen Abstützpunkt B ist.

15. Schwimmsattel-Teilbelag-Scheibenbremse nach Anspruch 1 mit einem Belaghaltebügel (106), dadurch **gekennzeichnet**, daß die Schenkel (108, 108') des U-förmigen Belaghaltebügels (106) derart gebogen sind, daß auf der einlaufenden Seite (E) der Bremse die Nuten (64) der Gleitführungen (64, 58) in entgegengesetzte Richtungen vorgespannt sind.

16. Schwimmsattel-Teilbelag-Scheibenbremse für Kraftfahrzeuge mit
- einem Schwimmsattel (14), der in bezug auf einen fahrzeugfesten Träger (12) verschiebbar gelagert ist,
- zwei Bremsbacken (16, 18), welche die Bremsscheibe (10) beiderseits beaufschlagen und auf ihren der Bremsscheibe abgekehrten Seiten Trägerplatten (24, 26) für Bremsbeläge (20, 22) aufweisen,
- einer hydraulischen Kolben-Zylinder-Anordnung (34) im Schwimmsattel (14), die einen der zwei Bremsbacken (16, 18) direkt und den anderen Bremsbacken über den Schwimmsattel (14) beaufschlagt, und
- einer Gleit-Führung (54, 60; 58, 64) zwischen dem Träger (12) und dem Schwimmsattel (14),
dadurch **gekennzeichnet** , daß eine der Belag-Trägerplatten (24) ausschließlich am Schwimmsattel (14) abgestützt ist und die andere vom Kolben (34) der Kolben- Zylinder-Anordnung mit einer axialen Klemmkraft beaufschlagt ist, wobei zwischen mindestens dieser anderen Belag-Trägerplatte (26) und dem Träger (12) eine weitere Gleit-Führung (62) vorgesehen ist.

**Claims**

1. A floating caliper spot-type disc brake for motor vehicles, comprising
- a floating caliper (14) supported for displacement with respect to a carrier member (12) which is fixed at the vehicle,
- two brake pads (16, 18) pressurizing the brake disc (10) from either side and being associated at their faces remote from the brake disc with backplates (24, 26) for friction linings (20, 22),
- an hydraulic piston and cylinder assembly (34) in the floating caliper (14) for direct pressurization of one of the two brake pads (16, 18) and pressurization of the other one by way of the floating caliper (14), and
- a sliding guide means (54, 60; 58, 64) between the carrier member (12) and the floating caliper (14), characterized in that one of the backplates (24 or 26) of the friction linings is supported exclusively on the floating caliper (14) and the other one exclusively on the piston (34) of the piston and cylinder assembly, and in that another sliding guide means (56, 62; 58', 62') is provided between the piston (34) or a structural member (40) firmly connected to the same and the carrier member (12).

2. The floating caliper spot-type disc brake as claimed in claim 1, characterized in that the sliding guide means (54, 60; 58, 64) between the carrier member (12) and the floating caliper (14) has two projections (54, 58) formed on either of these two members and two recesses (60, 64) in the other one in which the projections (54, 58) are displaceable perpendicularly with respect to the plane of the brake disc (10), and in that the sliding guide means (56, 65) between the piston (34) or the structural member (40) firmly connected to the same and the carrier member (12) has two projections (56, 58') formed on either of these two members and two recesses (62, 62') in the other one in which the projections are displaceable perpendicularly with respect to the plane of the brake disc (10).

3. The floating caliper spot-type disc brake as claimed in claim 2, characterized in that the projections each are embodied by guide pins (54, 56, 58, 58') fastened to the carrier member (12) and engaging in groove-like recesses (60, 62, 62', 64) in the floating caliper (14) or piston (34) or in the structural member (40) firmly connected to the piston.

4. The floating caliper spot-type disc brake as claimed in claim 1, characterized in that the sliding guide means are enclosed by elastic boots (66, 68, 70, 70').

5. The floating caliper spot-type disc brake as claimed in claim 1, caracterized in that two sliding guide means each (54, 60; 56, 62; 58', 62'; 58, 64) are provided circumferentially spaced at either side of the brake disc (10), the sliding guide means (54, 60; 58, 64) between the carrier member (12) and the floating caliper (14) being disposed at one side of the brake disc (10) and the sliding guide means (56, 62, 58', 62') between the carrier member (12) and the piston (34) or the structural member (40) firmly connected to the same being disposed at the other side of the brake disc (10).

6. The floating caliper spot-type disc brake as claimed in claim 4, characterized in that the elastic boots (66, 68, 70, 70') are covered by a protective sheet (72, 74, 76, 76') at least at their side facing the brake pads (20, 22).

7. The floating caliper spot-type disc brake as claimed in claim 6, characterized in that rotationally symmetrical seats for protective boots (66, 68, 70, and 70') are provided at the floating caliper (14) and piston (34), respectively.

8. The floating caliper spot-type disc brake as claimed in claim 1, characterized in that the sliding guide means at the trailing end (A) of the brake each are formed by tongue and groove arrangements (60, 96; 62, 98).

9. The floating caliper spot-type disc brake as claimed in claim 8, characterized in that a wedge-shaped guide pin (54, 56) each is fastened to the piston (34) or to a slide (40) firmly connected to the piston and to the floating caliper (14) at the trailing end (A) of the brake, said guide pin engaging in a complementary groove (60 or 62) formed in the carrier member (12) or in an intermediatepiece (90 or 92) firmly connected to the carrier member and made of steel, especially hardened steel.

10. The floating caliper spot-type disc brake as claimed in claim 8, characterized in that the sliding guide means (58, 64) between the piston (34) or slide (40) firmly connected to the same and the floating caliper (14) and the carrier member (12) at the leading end (E) of the brake each are formed by cylindrical guide pins (58) which are fastened to the carrier member (12) and engage in complementary grooves (64) in the piston or the slide (40) firmly connected to the same and in the floating caliper (14) or an intermediate piece (94) firmly connected to the caliper.

11. The floating caliper spot-type disc brake as claimed in claim 10, characterized in that springs (104) are arranged between the carrier member (12) or the guide pins (58) and the floating caliper (14) as well as the piston (34) at the leading end (E) of the brake to bias the floating caliper or the piston in the direction of the trailing end (A) of the brake.

12. The floating caliper spot-type disc brake as claimed in claim 2, characterized in that at least part of the groove-like recesses (60, 62, 62', 64) are formed in their bottoms each with another narrower groove (60a, 62a, 62'a, 64a) which is limited axially and into which engages a tongue each (54a, 56a, 58a, 58'a) of the respective guide pin (54, 56, 58, 58').

13. The floating caliper spot-type disc brake as claimed in claim 2, characterized in that the portion (54b, 56b, 58b, 58'b) of the guide pins (54, 56, 58, 58') engaging in the groove-like recesses (60, 62, 62', 64) includes flanks (56d) of barrel-surface shape.

14. The floating caliper spot-type disc brake as claimed in claim 1, characterized in that the piston (34) is offset in tangential, trailing-end direction with respect to the axis X of the brake by a distance $\Delta x$ which is defined as follows:

$$\Delta x = e + \frac{\mu}{1 + \mu \cdot \mu_o} \left[ h + \frac{e}{\mu} - \frac{g}{f}(k + \mu_1 \cdot 1) \right]$$

wherein
e = the distance between axis X and the point of support A of the backplates at the piston end;
$\mu$ = the coefficient of friction of the lining;
$\mu_o$ = the coefficient of friction of the support;
$\mu_1$ = the coefficient of friction of the piston (34);
h = the distance between the friction surface of the friction lining (22) at the piston end and the point of support A at the piston end;
g = the distance between the friction surface of the friction lining (20) at the floating caliper end and the point of support B at the floating caliper end;
k = the distance between the support point A at the piston end and the supporting force C of the friction lining at the floating caliper end as transmitted by the housing; and
f = the distance between the supporting force C and the support point B at the floating caliper end.

15. The floating caliper spot-type disc brake as claimed in claim 1, including a retaining clamp (106) for the friction linings, characterized in that the legs (108, 108') of the U-shaped friction lining retaining clamp (106) are curved such that at the leading end (E) of the brake the grooves (64) of the sliding guide means (64, 58) are biased in opposite directions.

16. A floating caliper spot-type disc brake for motor vehicles, comprising
– a floating caliper (14) supported for displacement with respect to a carrier member (12) which is fixed at the vehicle,
– two brake pads (16, 18) pressurizing the brake disc (10) from either side and being associated at their faces remote from the brake disc with backplates (24, 26) for friction linings (20, 22),
– an hydraulic piston and cylinder assembly (34) in the floating caliper (14) for pressurization of one of the two brake pads (16, 18) directly and pressurization of the other one by way of the floating caliper (14), and
– a sliding guide means (54, 60; 58, 64) between the carrier member (12) and the floating caliper (14), characterized in that one of the backplates (24) is supported at the floating caliper (14) only and the other one pressurized by the piston (34) of the piston and cylinder assembly by an axial clamping force, another sliding guide means (62) being provided between at least this other backplate (26) and the carrier member (12).

## Revendications

1. Frein à disque à étrier flottant et garniture partielle pour véhicules automobiles, comportant:
– un étrier flottant (14), qui est monté de façon à être déplaçable par translation par rapport à un support (12) solidaire du véhicule,
– deux mâchoires de frein (16, 18), qui sollicitent le disque de frein (10) des deux côtés et qui comportent, sur leurs côtés opposés au disque de frein, des plaques (24, 26) de support de garnitures de frein (20, 22),

EP 0 229 618 B1

– un dispositif hydraulique (34) à cylindre-piston installé dans l' étrier flottant (14) et qui sollicite une des deux mâchoires de frein (16, 18), directement, et l'autre mâchoire de frein par l'intermédiaire de l'étrier flottant (14), et
– un guide à glissement (54, 60; 58, 64) entre le support (12) et l'étrier flottant (14),
caractérisé en ce qu'une des deux plaques (24 ou 26) de support de garniture est appuyée exclusivement sur l'étrier flottant (14) tandis que l'autre est appuyée exclusivement sur le piston (34) du dispositif à cylindre-piston et en ce qu'il est prévu un autre guide à glissement (56, 62; 58', 62') entre le piston (34) ou bien un composant (40) relié rigidement à celui-ci et le support (12).

2. Frein à disque à étrier flottant et garniture partielle selon la revendication 1, caractérisé en ce que le guide à glissement (54, 60; 58, 64) prévu entre le support (12) et l'étrier flottant (14) comporte sur l'un de ces composants deux saillies (54, 58) et dans l'autre composant deux évidements (60, 64) dans lesquels les saillies (54, 58) sont déplaçables en translation perpendiculairement au plan de disque de frein (10) et en ce que le guide à glissement (58, 62) prévu entre le piston (34), ou bien le composant (40) relié rigidement à celui-ci, et le support (12) comporte sur l'un de ces composants deux saillies (56, 58') et dans l'autre composant deux évidements (62, 62') dans lesquels les saillies sont déplaçables en translation perpendiculairement au plan des disques de frein (10).

3. Frein à disque à étrier flottant et garniture partielle selon la revendication 2, caractérisé en ce que, comme saillies, respectivement des tétons de guidage (54, 56, 58, 58') sont fixés sur le support (12) et s'engagent dans des évidements (60, 62, 62', 64) en forme de rainures, prévus dans l'étrier (14) ou, respectivement, dans le piston (34) ou bien le composant (40) relié rigidement à celui-ci.

4. Frein à disque à étrier flottant et garniture partielle selon la revendication 1, caractérisé en ce que les guides à glissement sont entourés par des manchettes élastiques (66, 68, 70, 70').

5. Frein à disque à étrier flottant et garniture partielle selon la revendication 1, caractérisé en ce qu'il est prévu des deux côtés du disque de frein (10), en étant espacés de celui-ci dans une direction circonférentielle respectivement deux guides à glissement (54, 60; 56, 62; 58', 62'; 58, 64), les guides à glissement (54, 60; 58, 64) prévus entre le support (12) et l'étrier flottant (14) étant disposés d'un côté du disque de frein (10) tandis que les guides à glissement (56, 62; 58', 62') prévus entre le support (10) et le piston (34) ou bien le composant (40) relié rigidement à celui-ci sont disposés de l'autre côté du disque de frein (10).

6. Frein à disque à étrier flottant et garniture partielle selon la revendication 4, caractérisé en ce que les manchettes élastiques (66, 68, 70, 70') sont recouvertes par une tôle protectrice (72, 74, 76, 76') au moins sur leur côté dirigé vers les garnitures de frein (20, 22).

7. Frein à disque à étrier flottant et garniture partielle selon la revendication 1, caractérisé en ce qu'il est prévu, sur l'étrier flottant (14) ou le piston (34), des sièges à symétrie de révolution pour les manchettes protectrices (66, 68, 70 et 70').

8. Frein à disque à étrier flottant et garniture partielle selon la revendication 1, caractérisé en ce que les guides à glissement sont constitués, sur le côté de sortie (A) du frein, respectivement par des agencements à clavette/rainure (60, 96; 62, 98).

9. Frein à disque à étrier flottant et garniture partielle selon la revendication 8, caractérisé en ce que sur le piston (34), ou bien sur un coulisseau (40) relié rigidement à celui-ci, et sur l'étrier flottant (14), du côté de sortie (A) du frein, est fixé respectivement un téton de guidage (54, 56) en forme de clavette, qui est engagé dans une rainure de forme complémentaire (60 ou 62), qui est formée dans le support de frein (12) ou bien dans une pièce intermédiaire (90 ou 92) reliée rigidement à celui-ci et constituée notamment d'acier trempé.

10. Frein à disque à étrier flottant et garniture partielle selon la revendication 8, caractérisé en ce que, sur le côté d'entrée (E) du frein, les guides à glissement (58, 64) prévus entre le piston (34) ou bien le coulisseau (40) relié rigidement à celui-ci, ainsi que l'étrier flottant (14) et le support de frein (12), sont constitués respectivement de tétons cylindriques de guidage (58), qui sont fixés sur le support de frein (12) et qui s'engagent dans des rainures de forme complémentaire (64) formées dans le piston ou bien dans le coulisseau (40) relié rigidement à celui-ci et dans l'étrier flottant (14) ou bien une pièce intermédiaire (94) reliée rigidement à celui-ci.

11. Frein à disque à étrier flottant et garniture partielle selon la revendication 10, caractérisé en ce que sur le côté d'entrée (E), entre le support de frein (12) ou bien les tétons de guidage (58) et l'étrier flottant (14) ainsi que le piston (34), sont prévus des ressorts (104) qui exercent une précontrainte sur l'étrier flottant ou bien le piston en direction du côté de sortie (A) du frein.

12. Frein à disque à étrier flottant et garniture partielle selon la revendication 2, caractérisé en ce qu'au moins une partie des évidements en forme de rainures (60, 62, 62', 64) sont pourvus dans leurs fonds respectivement d'une autre rainure (60a, 62a, 62'a, 64a) plus étroite et axialement limitée, dans chacune desquelles est engagé un pointeau (54a, 56a, 58a, 58'a) du téton de guidage associé (54, 56, 58, 58').

13. Frein à disque et étrier flottant et garniture partielle selon la revendication 2, caractérisé en ce que la partie (54b, 56b, 58b, 58'b) des tétons de guidage (54, 56, 58, 58') s'engageant dans les évidements en forme de rainure (60, 62, 62', 64) comporte des flancs (56b) conformés en barillet.

14. Frein à disque à étrier flottant et garniture partielle selon la revendication 1, caractérisé en ce que le piston (34) est décalé par rapport à l'axe (X) du frein, dans une direction tangentielle de sortie, d'une

distance ($\Delta x$) qui est définie par la relation suivante:

$$\Delta x = e + \frac{\chi\mu}{1 + \mu.\mu_o}\left[h + \frac{e}{g} - \frac{g}{f}(k + \mu_1.1)\right]$$

où:

e désigne la distance entre l'axe (X) et le point d'appui (A) situé du côté du piston, des plaques de supports;

$\mu$ désigne le coefficient de frottement de la garniture;

$\mu_o$ désigne le coefficient de frottement de la partie d'appui;

$\mu_1$ désigne le coefficient de frottement du piston (34);

h désigne la distance entre la surface de frottement de la garniture de frein (22) située du côté du piston et le point d'appui (A) situé du côté du piston;

g désigne la distance entre la surface de frottement de la garniture de frein (20) située du côté de l'étrier flottant, et le point d'appui (B), situé du côté de l'étrier flottant;

k désigne la distance entre le point d'appui (A) situé du côté du piston et la force d'appui (C), transmise par le carter, de la garniture située du côté de l'étrier flottant;

f désigne la distance entre la force d'appui (C) et le point d'appui (B) situé du côté de l'étrier flottant.

15. Frein à disque à étrier flottant et garniture partielle selon la revendication 1, comportant un arceau (106) de maintien de garniture, caractérisé en ce que les branches (108, 108') de l'arceau (106) de maintien de garniture en forme de U sont pliées de telle sorte que, sur le côté d'entrée (E) du frein, les rainures (64) des guides à glissement (64, 68) soient précontraintes dans des sens opposés.

16. Frein à disque à étrier flottant et garniture partielle pour véhicules automobiles comportant:

– un étrier flottant (14), qui est monté de façon à être déplaçable par translation par rapport à un support (12) solidaire du véhicule,

– deux mâchoires de frein (16, 18), qui sollicitent le disque de frein (10) des deux côtés et qui comportent, sur leurs côtés opposés au disque de frein, des plaques (24, 26) de support de garnitures de frein (20, 22),

– un dispositif hydraulique (34) à cylindre-piston installé dans l'étrier flottant (14) et qui sollicite une des deux mâchoires de frein (16, 18), directement, et l'autre mâchoire de frein par l'intermédiaire de l'étrier flottant (14), et

– un guide à glissement (54, 60; 58, 64) entre le support (12) et l'étrier flottant (14), caractérisé en ce qu'une des plaques (24) de support de garnitures est appuyée exclusivement contre l'étrier flottant (14) tandis que l'autre est sollicitée par le piston (34) du dispositif à cylindre-piston avec une force axiale de serrage, un autre guide à glissement (62) étant prévu entre au moins cette autre plaque (26) de support de garniture et le support (12).

FIG.1

FIG.2

FIG.3

FIG.4

FIG. 5

FIG. 6

FIG.7

FIG.8

FIG.9a

56 56b 56d 56a
62a
200
56d

FIG.9

FIG.9

74a
74
12
62a
62
40
12a
68
56d
202
56
56c
IXa
IXa
74'
74a
56b
56d
56a
200
26
74
74
56d
22

74

EP 0 229 618 B1

FIG.10

EP 0 229 618 B1